# EUROPÄISCHE PATENTSCHRIFT

(11) **EP 0 333 145 B1**
(45) Veröffentlichungstag und Bekanntmachung des Hinweises auf die Patenterteilung: **17.02.1993**
(21) Anmeldenummer: 89104545.2
(22) Anmeldetag: 14.03.1989
(51) Int. Cl.: F24J 2/04, F24J 2/00, E04B 1/74

(54) **Wärmedämmverbundsystem**
Thermal insulation compound system
Système composé pour isolation thermique

(30) Priorität: 14.03.1988 DE 3808482
(43) Veröffentlichungstag der Anmeldung: 20.09.1989
(73) Patentinhaber: STO AKTIENGESELLSCHAFT, D-79778 Stühlingen (DE)
(72) Erfinder: Grochal, Peter, Dr. rer. nat., D-7890 Waldshut-Tiengen 1 (DE)
(74) Vertreter: Patentanwälte Leinweber & Zimmermann

(56) Entgegenhaltungen:
- EP-A- 0 123 091
- DE-A- 2 906 259
- DE-A- 3 214 421
- DE-A- 3 435 613
- BAUPHYSIK Band 9, Nr. 5, September 1987, Seiten 213-217, Berlin, D; K, GERTIS:"Aussenwände mit transparenten Wärmedämmstoffen"

## Beschreibung

Die Erfindung bezieht sich auf ein Wärmedämmverbundsystem zur Festlegung an einer Gebäudewand, welches eine lichtabsorbierende Wandaußenfläche, ein zumindest teilweise lichtdurchlässiges Wärmedämmaterial und außenseitig eine wetterbeständige, zumindest teilweise lichtdurchlässige Deckschicht umfaßt.

Bei einem bekannten Wärmedämmverbundsystem dieser Art (EP-A 0 123 091) zur Absorption von Sonnenenergie ist an der Außenseite des Wärmedämmaterials eine lichtdurchlässige Deckschicht in Form von Folien oder Scheiben aus Silikat- oder Acrylglas, insbesondere Preßglas, vorgesehen. Deren Einsatz erfolgt in Form vorgefertigter fensterähnlich in Aluminiumrahmen verbundener Einheiten. Bei Altbausanierungen sind diese Einheiten kaum verwendbar. Bei Neubauten müssen sie bereits im Entwurfsstadium eingeplant werden. Außerdem lassen sich bei diesen platten-, ziegel- oder riemenförmigen Scheiben Trennfugen nicht vermeiden, die durch ein abweichendes Material gefüllt sind. Die Herstellung einer derartigen äußeren Deckschicht ist nicht nur äußerst umständlich, zeitaufwendig und kostspielig. Es ist auch sehr schwierig, die erforderliche Festigkeit und Stabilität dieser transparenten Außenschicht zu schaffen und über längere Zeit zu gewährleisten. Außerdem sind mit diesem Wärmedämmverbundsystem die architektonischen Gestaltungsmöglichkeiten sehr eingeschränkt, insbesondere wenn es sich um dessen Einsatz bei geometrisch verwickelten Fassadenbereichen handelt. Hinzu kommt der Umstand, daß aufgrund der hohen Transparenz mit einer Lichtdurchlässigkeit von 50 % und darüber Beschattungsvorrichtungen in Form von Jalousien, Rollos oder dgl. vorgesehen sein müssen, die mittels einer Regelungseinrichtung in sehr aufwendiger Weise eingestellt bzw. laufend verstellt werden. Aufgrund der Wasserdampfundurchlässigkeit der zum Einsatz gelangenden Scheiben oder dgl. ergeben sich bei Temperaturschwankungen erhebliche Kondensationsprobleme, insbesondere wenn die Temperaturen den Gefrierpunkt unterschreiten.

Der Erfindung liegt die Aufgabe zugrunde, das Wärmedämmverbundsystem der eingangs genannten Art so weiter auszugestalten, daß auf besonders einfache Weise ein sicherer Schutz des Wärmedämmaterials gegen äußere Einwirkungen, insbesondere gegen Witterungseinflüsse, ohne Beeinträchtigung der angestrahlten Lichtabsorptionswirkung gewährleistet ist.

Das Wärmedämmverbundsystem nach der Erfindung, bei dem diese Aufgabe gelöst ist, zeichnet sich im wesentlichen dadurch aus, daß die Deckschicht eine Putzschicht mit einer Schichtdicke zwischen 0,5 und 6 mm aus einem Füllstoffe in einem solchen Umfang enthaltenden aushärtenden Bindemittel ist, daß der Strahlungstransmissionsgrad bei senkrechter Einstrahlung über 20 % liegt. Da sich diese wetterbeständige Deckschicht wie herkömmlicher Putz auftragen läßt, ergibt sich der erforderliche feste Verbund automatisch. Aufwendiger Verankerungs-Hilfsvorrichtungen, wie sie zur Halterung der Glasscheiben erforderlich sind, bedarf es bei Herstellung dieser Deckschicht nicht. Ästhetisch unansehnliche Fugen bzw. Rahmenkonstruktionen, die die Gestaltungsmöglichkeiten bei der Sanierung von Altbauten beeinträchtigen, entfallen. Durch Aufbringen einer transparenten Wärmedämmung, die den Durchtritt der Lichtstrahlung bis zu einer von ihr abgedeckten, lichtundurchlässigen opaken Schicht ermöglich, und durch anschließendes Aufbringen der Deckschicht, die die erwähnten lichtdurchlässigen Füllstoffe enthält, wird vielmehr auf sehr einfache Weise mit geringen Gestehungskosten eine der Solarenergienutzung dienende und dennoch ästhetisch ansprechende Gebäudeummantelung erzielt. Da sie eine Dampfdiffusion ermöglich, sind Kondensationsprobleme vermieden. Der bislang erforderliche Einsatz von die transparente Wärmedämmung abdeckenden und nach außen schützenden platten-, ziegel- oder riemenförmigen Scheiben wird beim Aufbringen der Deckschicht nach der Erfindung entbehrlich. Hervorzuheben ist ferner, daß sich die Deckschicht, offenbar bedingt durch die erwähnte weitgehende Lichtdurchlässigkeit, die auch in aufgetragenem und ausgehärtetem Zustand erhalten bleibt, durch Wegfall des bei herkömmlichen Putzen bekannten stumpfen Aussehens auszeichnet; sie verleiht dem beschichteten Baukörper vielmehr ein besonders ansprechendes dekoratives Äußeres.

Als sehr vorteilhaft im Hinblick auf die Sicherstellung einer auch über sehr lange Zeiträume haltbaren und funktionstüchtigen Abdeckung des Wärmedämmaterials hat sich die Anordnung einer lichtdurchlässigen Armierung zwischen dem Wärmedämmaterial und der lichtdurchlässigen Deckschicht herausgestellt.

Eine besonders leichte, schnelle und sichere Festlegung des Wärmedämmaterials an der Wandaußenfläche ergibt sich, wenn zu diesem Zweck eine Klebstoffschicht verwendet wird. Hierbei hat sich die Beschichtung mit lichtdurchlässiger Spachtelmasse als ebene Unterschicht auf altem Mauerwerk als vorteilhaft herausgestellt, wobei ggf. eine weitere gleiche Schicht auf die Unterschicht nach deren Trocknung aufgebracht wird, um sodann mit dieser Schicht das Wärmedämmaterial zu verankern. Zur Sicherstellung der gewünschten Absorption kann vor Aufbringung der ersten oder der zweiten Spachtelmassenschicht ein schwarzer Anstrich aufgebracht oder die zweite Schicht schwarz angetönt werden. Für die Festlegung des Wärmedämmaterials am Untergrund hat es sich als besonders günstig erwiesen, wenn das Wärmedämmaterial in Form von Wärmedämmplatten ausgebildet ist.

Bevorzugte lichtdurchlässige Wärmedämmplatten bestehen aus kapillaren Platten, Wabenplatten, Strukturschaumplatten oder Faserplatten, die aus lichtbeständigen, hochtransparenten Kunststoffen, wie z. B. Polycarbonat, Polymethylmethacrylat u. a., gebildet sind. Ein Einsatz von Platten aus Glasfasern, Glasschaum oder Glaskapillaren ist gleichfalls möglich.

Die erwähnte Klebstoffschicht kann zweckmäßigerweise gleichzeitig die lichtabsorbierende Schicht bilden, genauer gesagt die lichtabsorbierende Wandaußenfläche. Als Kleber- und Absorptionsschicht haben sich besonders Materialien mit einer Wärmeleitfähigkeit > 0,5 [W/mK] als günstig erwiesen, z. B. mit Kunststoff vergütete hydraulisch abbindende Klebermassen.

Um eine hohe Festigkeit bei dennoch günstiger Lichttransmission zu erzielen, ist die lichtdurchlässige Armierung durch eine Schicht lichtdurchlässiger Spachtelmasse gebildet, in die zur Verstärkung ein Glas- und/oder Kunststoffgewebe eingebettet werden kann.

In weiterer Ausgestaltung des Wärmedämmverbundsystems bei Vorhandensein eines an der Gebäudewand festgelegten opaken Wärmedämmaterials hat es sich als zweckmäßig erwiesen, wenn das nur in Teilbereichen der Gebäudewand festgelegte opake Wärmedämmaterial mit dem in anderen Teilbereichen der Gebäudewand festgelegten, lichtdurchlässigen Wärmedämmaterial fugenlos verbunden ist.

Ein besonders leichter Einsatz des Wärmedämmverbundsystems ergibt sich, wenn sowohl das opake Wärmedämmaterial als auch das lichtdurchlässige Wärmedämmaterial in Form von Wärmedämmplatten ausgebildet und an der Wandaußenfläche festgelegt ist.

Zur Schaffung einer fugenlosen Verbindung der opaken Wärmedämmplatten mit den lichtdurchlässigen Wärmedämmplatten ist es zweckmäßig, die die opaken Platten abdeckende Armierung über die Plattenstöße zwischen den opaken und den lichtdurchlässigen Wärmedämmplatten hinwegreichend bis auf die Randzone der lichtdurchlässigen Platten aufzutragen; dabei sollte sich an diese Armierung die die lichtdurchlässigen Wärmedämmplatten abdeckende lichtdurchlässige Armierung unmittelbar bündig anschließen.

Um den Zutritt der durch das Sonnenlicht an der Oberfläche der Gebäudewand absorbierten Wärmeenergie in das Gebäudeinnere zu steuern, oder die gewonnene Wärme anderweitig zu nutzen, hat es sich als günstig erwiesen, wenn das lichtdurchlässige Wärmedämmaterial in einem eine Hinterlüftung ermöglichenden Abstand von der lichtabsorbierenden Wandaußenfläche festgelegt ist. Auf diese Weise entstehen zwischen dem Wärmedämmaterial und der Wandaußenfläche Kanäle, in denen erhitzte Luft aufsteigen und unter Wärmeabfuhr austreten kann, sofern im unteren Bereich und im oberen Bereich der Hinterlüftungskanäle Klappen oder dgl. geöffnet sind, die eine Luftzirkulation zulassen. In baulicher Hinsicht günstig ist die Festlegung des lichtdurchlässigen Wärmedämmaterials auf einer an der Gebäudewand fixierten Tragkonstruktion.

Als besonders günstig hat es sich erwiesen, wenn als Bindemittel für die wetterfeste Deckschicht organische Bindemittel, insbesondere Kunstharze in Form einer Dispersion oder einer Lösung Einsatz finden. Zweckmäßigerweise umfaßt das Deckschichtmaterial dabei Polyacrylate, Polymethacrylate, deren Kopolymere, Styrol-, Äthylen-, Vinylacetat- bzw. Fluoräthylenkopolymere, Silikonharze, Polycarbonate, Epoxide bzw. Polyurethane. Die Polyacrylat- und Methacrylatkopolymere sind dabei wegen der sehr guten Lichtstabilität besonders vorteil haft.

Statt dessen kann das Bindemittel für die wetterfeste Deckschicht auch anorganische Bindemittel, insbesondere Wasserglas umfassen.

Um die fragliche Transparenz und damit einerseits die Absorption von Sonnenenergie und andererseits den Dekoreffekt auf besonders einfache Weise ohne hohe Gestehungskosten sicherzustellen, ist es von Vorteil, wenn die im putzartig auftragbaren Deckschichtmaterial vorgesehenen Füllstoffe zumindest teilweise durch anorganische Glasfüllstoffe, wie Glasgrieß, Glaskugeln oder linsenförmige Glaskörper oder auch durch kristalline Silikate oder Carbonate gebildet sind. Als Füllstoffe, die im Deckschichtmaterial vorgesehen sein können und die sich durch ihr relativ kleines spezifisches Gewicht auszeichnen, haben sich organische Kunststoffgranulate beliebiger Formgebung auf der Basis von Polymethylacrylat, Polycarbonat, Polystyrol oder dgl. als günstig erwiesen.

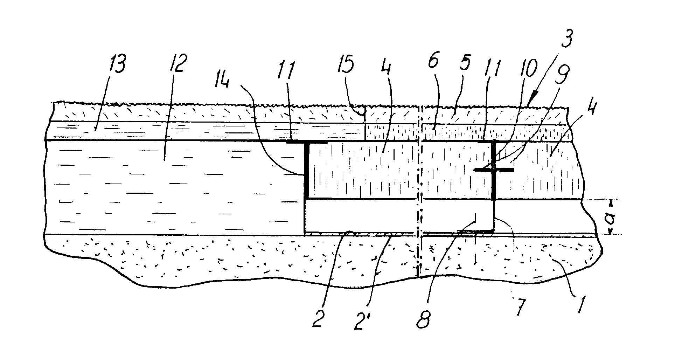

Weitere Einzelheiten, Vorteile und Merkmale der Erfindung ergeben sich aus der folgenden Beschreibung anhand der beigefügten Zeichnung, in der äußerst schematisch und keineswegs maßstabsgetreu das Wärmedämmverbundsystem in seinem prinzipiellen Aufbau beispielsweise veranschaulicht ist.

Wie aus der Zeichnung ersichtlich, ist an einer Gebäudewand 1 mit einer lichtabsorbierenden Wandaußenfläche 2 ein Wärmedämmverbundsystem 3 festlegbar. Dieses umfaßt ein zumindest teilweise lichtdurchlässiges Wärmedämmaterial 4, das außenseitig gegen Witterungseinwirkungen geschützt ist. Zu diesem Zweck ist das Wärmedämmaterial 4 mit einer wetterbeständigen Deckschicht 5 aus einem zumindest teilweise lichtdurchlässige Füllstoffe in einem solchen Umfang enthaltenden aushärtenden Bindemittel versehen, daß der Strahlungstransmissionsgrad des Sonnenlichtes bei senkrechter Einstrahlung und Schichtdicken zwischen 0,5 mm und 6 mm über 20 % liegt. Zwischen der lichtdurchlässigen Deckschicht 5, die einen putzartigen Charakter besitzt, und dem Wärmedämmaterial 4 ist eine lichtdurchlässige Armierung 6 angeordnet. Das Wärmedämmaterial 4 kann mittels einer Klebstoffschicht 2' unmittelbar an der Wandaußenfläche 2 festgelegt sein. Diese Festlegung des Wärmedämmaterials 4 ist besonders leicht ausführbar, wenn es in Form von Wärmedämmplatten ausgebildet ist. Die Wärmedämmplatten 4 sind zweckmäßigerweise als kapillare Platten ausgebildet, d. h. aus einer Vielzahl von aneinanderliegenden, untereinander verbundenen Kunststoffröhrchen mit einem Innendurchmesser von 1 bis 3,5 mm, vorzugsweise 2,5 mm, die quer zur Plattenebene, d. h. in Lichtdurchtrittsrichtung ausgerichtet sind. Die Verbindung dieser Röhrchen erfolgt z. B. im Zuge der Ablängung mittels eines Heizdrahtes, d. h. jeweils im Bereich der sich in den Ebenen der Plattenaußenflächen befindenden Röhrchenenden. Beim Auftragen der Deckschicht 5 unmittelbar oder zuvor der Armierung 6 dringt das Material ein wenig in die Kapillaröffnungen ein und trägt in abgebundenem Zustand zu einem gegenseitigen Halt der Röhrchenenden bei. Bei Einsatz des Dämmaterials 4 in Plattenform kann es auch, wie in der Zeichnung veranschaulicht, in einem eine Hinterlüftung ermöglichenden Abstand a von der lichtabsorbierenden Wandaußenfläche 2 festgelegt sein. Zu diesem Zweck ist an der Gebäudewand 1 eine Tragkonstruktion 7 festgelegt, beispielsweise durch Verschraubung 8. Diese Tragkonstruktion 7 umfaßt einen sich quer von der Wand 1 weg erstreckenden Arm mit seitlichen Vorsprüngen 9, die in schlitzartige Ausnehmungen im Randbereich der Wärmedämmplatten 4 eingreifen. Eine andere, nicht dargestellte Möglichkeit der Befestigung besteht in einer Verklebung der Tragkonstruktion an der rückwärtigen Seite der Dämmplatte.

Bei unmittelbarer Festlegung der Wärmedämmplatten 4 an der Gebäudewand 1 wird eine Klebstoffschicht 2' benutzt, die dann gleichzeitig die lichtabsorbierende Wandaußenfläche 2 bilden kann.

Aus der Zeichnung ist entnehmbar, daß der Bereich der Plattenstöße 10 im veranschaulichten Ausführungsbeispiel durch ein lichtdurchlässiges Klebeband 11 beispielsweise auf Polycarbonatbasis zusätzlich armiert ist. Die unmittelbar darüber aufgetragene lichtdurchlässige Armierung 6 ist durch eine Schicht lichtdurchlässiger Spachtelmasse mit eingelagertem Glas- und/oder Kunststoffgewebe gebildet.

Der Zeichnung ist ferner entnehmbar, daß sich das lichtdurchlässige Wärmedämmaterial 4 unmittelbar an ein an der Gebäudewand festgelegtes opakes Wärmedämmaterial 12 anschließen kann, und zwar derart, daß das Wärmedämmverbundsystem einen zumindest teilweise lichtdurchlässigen Bereich und einen lichtundurchlässigen Bereich umfaßt. Sowohl das opake Wärmedämmaterial 12 als auch das lichtdurchlässige Wärmedämmaterial in Form der Wärmedämmplatten 4 sind an der Gebäudewand 1 festgelegt. Zur Schaffung einer fugenlosen Verbindung der opaken Wärmedämmplatten 12 mit den lichtdurchlässigen Wärmedämmplatten 4 ist die die opaken Platten abdeckende Armierung 13 über die Plattenstöße 14 zwischen den opaken und den lichtdurchlässigen Wärmedämmplatten hinwegreichend bis auf die Randzone der lichtdurchlässigen Platten 4 aufgetragen. An diese Armierung schließt sich die die lichtdurchlässigen Wärmedämmplatten 4 abdeckende lichtdurchlässige Armierung 6 unmittelbar bündig an. Es ist möglich, ein und dieselbe wetterbeständige Deckschicht 5 zur Abdeckung sowohl des opaken Wärmedämmaterials 12 als auch des lichtdurchlässigen Wärmedämmaterials 4, ggf. über die Armierungen 13 bzw. 6 zu verwenden. Statt dessen kann sich an die Deckschicht 5 an der Übergangszone 15 vom einen Gebiet zum anderen auch ein opaker Putz 16 bündig anschließen.

Beispiele für die Formulierung des erfindungsgemäßen putzartig auftragbaren Deckschichtmaterials sind nachstehend angegeben. Die in den Beispielen 1 und 2 angegebene Masse ist nicht nur zur Bildung der Deckschicht 5, sondern auch als Armierung 6, ggf. unter Einlagerung von Gewebe, einsetzbar.

### Beispiel 1:

| Zusammensetzung einer ersten Bindemittelkomponente | |
|---|---|
| 93,8 Gew.% | Acrylatdispersion |
| 0,7 " | Konservierungsmittel |
| 3,5 " | Lösemittel |
| 1,0 " | Entschäumer |
| 1,0 " | Verdickungsmittel |
| 100,0 " | |

### Beispiel 2:

| Zusammensetzung einer zweiten Bindemittelkomponente | |
|---|---|
| 25,0 Gew.% | Acrylatharz |
| 71,5 " | Lösemittel |
| 0,5 " | Verdickungsmittel |
| 3,0 " | Weichmacher |
| 100,0 " | |

### Beispiel 3:

| Beschichtung | |
|---|---|
| 15,0 Gew.% | Bindemittelkomponente aus Beispiel 1 |
| 45,0 " | Glasgrieß 1,5 mm |
| 40,0 " | Glasgrieß 2,0 mm |
| 100,0 " | |
| Gemessener Strahlungstransmissionsgrad 35 % | |

### Beispiel 4:

| | |
|---|---|
| 15,0 Gew.% | Bindemittelkomponente aus Beispiel 1 |
| 45,0 " | Glasgrieß 1,5 mm |
| 40,0 " | Glaskugeln 2,0 mm |
| 100,0 " | |
| Gemessener Strahlungstransmissionsgrad 44 % | |

### Beispiel 5:

| | |
|---|---|
| 15,0 Gew.% | Bindemittelkomponente aus Beispiel 1 |
| 45,0 " | Glaskugeln 1,5 mm |
| 40,0 " | Polycarbonat-Granulat 4,0 mm |
| 100,0 " | |
| Gemessener Strahlungstransmissionsgrad 49 % | |

### Beispiel 6:

| | |
|---|---|
| 20,0 Gew.% | Bindemittelkomponente aus Beispiel 2 |
| 40,0 " | Glasgrieß 1,5 mm |
| 40,0 " | Glasgrieß 4,0 mm |
| 100,0 " | |
| Ermittelter Strahlungstransmissionsgrad 40 % | |

### Beispiel 7:

| | |
|---|---|
| 20,0 Gew.% | Bindemittelkomponente aus Beispiel 2 |
| 40,0 " | Glasgrieß 1,5 mm |
| 40,0 " | Glaskugeln 2,0 mm |
| 100,0 " | |
| Ermittelter Strahlungstransmissionsgrad 44 % | |

### Beispiel 8:

| | |
|---|---|
| 20,0 Gew.% | Bindemittelkomponente aus Beispiel 2 |
| 20,0 " | Glaskugeln 1 mm |
| 20,0 " | Glaskugeln 2 mm |
| 40,0 " | Glaskugeln 4 mm |
| 100,0 " | |
| Ermittelter Strahlungstransmissionsgrad 54 % | |

Besonders günstig im Hinblick auf ein niedriges spezifisches Gewicht ist der Einsatz von anorganischen Glasfüllstoffen in Form von Glashohlkugeln bzw. von geschäumtem Glas in gemahlenem Zustand.

## Patentansprüche

1. Wärmedämmverbundsystem (3) zur Festlegung an einer Gebäudewand (1), welches eine lichtabsorbierende Wandaußenfläche (2), ein zumindest teilweise lichtdurchlässiges Wärmedämmaterial (4) und außenseitig eine wetterbeständige, zumindest teilweise lichtdurchlässige Deckschicht (5) umfaßt, dadurch **gekennzeichnet,** daß die Deckschicht (5) eine Putzschicht mit einer Schichtdicke zwischen 0,5 und 6 mm aus einem Füllstoffe in einem solchen Umfang enthaltenden aushärtenden Bindemittel ist, daß der Strahlungstransmissionsgrad bei senkrecher Einstrahlung über 20% liegt.

2. Wärmedämmverbundsystem nach Anspruch 1, dadurch **gekennzeichnet,** daß zwischen dem Wärmedämmaterial (4) und der lichtdurchlässigen Deckschicht (5) eine lichtdurchlässige Armierung (6) angeordnet ist.

3. Wärmedämmverbundsystem nach Anspruch 1 oder 2, dadurch **gekennzeichnet,** daß das Wärmedämmaterial (4) mittels einer Klebstoffschicht (2') an der Wandaußenfläche (2) festgelegt ist.

4. Wärmedämmverbundsystem nach einem der Ansprüche 1 bis 3, dadurch **gekennzeichnet,** daß das Wärmedämmaterial in Form von Wärmedämmplatten (4) ausgebildet ist.

5. Wärmedämmverbundsystem nach Anspruch 4, dadurch **gekennzeichnet,** daß die Wärmedämmplatten (4) aus kapillaren Platten, Wabenplatten, Strukturschaumplatten oder Faserplatten, die aus lichtbeständigen, hochtransparenten Kunststoffen, wie z.B. Polycarbonat, Polymethylmethacrylat oder dgl., oder aus Glasfasern, Glasschaum oder Glaskapillaren gebildet sind.

6. Wärmedämmverbundsystem nach Anspruch 5, dadurch **gekennzeichnet,** daß die kapillaren Platten aus einer Vielzahl von ane inanderliegenden, miteinander verbundenen Kunststoffröhrchen mit einem Innendurchmesser von 1 bis 3,5 mm, vorzugsweise 2,5 mm, gebildet sind, die quer zur Plattenebene, d. h. in Lichtdurchtrittsrichtung ausgerichtet sind.

7. Wärmedämmverbundsystem nach Anspruch 6, dadurch **gekennzeichnet,** daß die Röhrchen im Zuge der Ablängung mittels eines Heizdrahtes, d. h. jeweils im Bereich der sich in den Ebenen der Plattenaußenflächen befindenden Röhrchenenden durch Verschmelzen miteinander verbunden sind.

8. Wärmedämnverbundsystem nach einem der Ansprüche 4 bis 7, dadurch **gekennzeichnet,** daß der Bereich der Plattenstöße (10) durch ein lichtdurchlässiges Klebeband (11) armiert ist.

9. Wärmedämmverbundsystem nach einem der Ansprüche 1 bis 8, dadurch **gekennzeichnet,** daß die zwischen dem Wärmedämmaterial (4) und der Wandaußenfläche (2) vorgesehene Klebstoffschicht (2') die lichtabsorbierende Schicht bildet.

10. Wärmedämmverbundsystem nach einem der Ansprüche 2 bis 9, dadurch **gekennzeichnet,** daß die lichtdurchlässige Armierung (6) durch eine Schicht lichtdurchlässiger Spachtelmasse gebildet ist.

11. Wärmedämmverbundsystem nach Anspruch 10, dadurch **gekennzeichnet,** daß in die lichtdurchlässige Spachtelmasse Glas- und/oder Kunststoffgewebe eingelagert ist.

12. Wärmedämmverbundsystem nach einem der Ansprüche 1 bis 11, mit an der Gebäudewand (1) festgelegtem opaken Wärmedämmaterial (12), dadurch **gekennzeichnet,** daß das nur in Teilbereichen der Gebäudewand (1) festgelegte opake Wärmedämmaterial (12) mit dem in anderen Teilbereichen der Gebäudewand festgelegten, lichtdurchlässigen Wärmedämmaterial (4) fugenlos verbunden ist.

13. Wärmedämmverbundsystem nach Anspruch 12, dadurch **gekennzeichnet,** daß sowohl das opake Wärmedämmmaterial (12) als auch das lichtdurchlässige Wärmedämmaterial (4) in Form von Wärmedämmplatten ausgebildet und an der Wandaußenfläche festgelegt ist.

14. Wärmedämmverbundsystem nach den Ansprüchen 12 oder 13, dadurch **gekennzeichnet,** daß zur Schaffung einer fugenlosen Verbindung der opaken Wärmedämmplatten (12) mit den lichtdurchlässigen Wärmedämmplatten (4) die die opaken Platten abdeckende Armierung (13) über die Plattenstöße (14) zwischen den opaken und den lichtdurchlässigen Wärmedämmplatten (12, 4) hinwegreichend bis auf die Randzone der lichtdurchlässigen Platten (4) aufgetragen ist und daß sich an diese Armierung die die lichtdurchlässigen Wärmedämmplatten (4) abdeckende lichtdurchlässige Armierung (6) unmittelbar bündig anschließt.

15. Wärmedämmverbundsystem nach einem der Ansprüche 1 bis 14, dadurch **gekennzeichnet,** daß das Lichtdurchlässige Wärmedämmaterial (4) in einem eine Hinterlüftung ermöglichenden Abstand (a) von der lichtabsorbierenden Wandaußenfläche (2) festgelegt ist.

16. Wärmedämmverbundsystem nach Anspruch 15, dadurch **gekennzeichnet,** daß das lichtdurchlässige Wärmedämmaterial (4) auf einer an der Gebäudewand (1) fixierten Tragkonstruktion (7) festgelegt ist.

17. Wärmedämmverbundsystem nach einem der Ansprüche 1 bis 16, dadurch **gekennzeichnet,** daß als Bindemittel für die wetterfeste Deckschicht (5) organische Bindemittel, insbesondere Kunstharze in Form einer Dispersion oder einer Lösung Einsatz finden.

18. Wärmedämmverbundsystem nach Anspruch 17, dadurch **gekennzeichnet,** daß das Deckschichtmaterial Polyacrylate, Polymethacrylate, deren Kopolymere, Styrol-, Äthylen-, Vinylacetat- bzw. Fluoräthylenkopolymere, Silikonharze, Polycarbonate, Epoxide bzw. Polyurethane umfaßt.

19. Wärmedämmverbundsystem nach einem der Ansprüche 1 bis 16, dadurch **gekennzeichnet,** daß das Bindemittel für das wetterfeste Deckschichtmaterial anorganische Bindemittel, insbesondere Wasserglas, umfaßt.

20. Wärmedämmverbundsystem nach einem der Ansprüche 1 bis 19, dadurch **gekennzeichnet,** daß die im Deckschichtmaterial vorgesehenen Füllstoffe zumindest teilweise durch anorganische Glasfüllstoffe, wie Glashohlkugeln oder geschäumtes Glas in gemahlenem Zustand, oder auch durch kristalline Silikate oder Carbonate, vorzugsweise durch Glasgrieß, Glaskugeln oder Glaslinsen, gebildet sind.

21. Wärmedämmverbundsystem nach einem der Ansprüche 1 bis 20, dadurch **gekennzeichnet,** daß die im Deckschichtmaterial vorgesehenen Füllstoffe zumindest teilweise durch organische Kunststoffgranulate beliebiger Formgebung auf der Basis von Polymethylacrylat, Polycarbonat, Polystyrol oder dgl. gebildet sind.

## Claims

1. Heat-insulating composite system (3), for attachment to a building wall (1), which comprises a light-absorbing wall external surface (2) an at least partly light-transmitting heat insulation material (4) and on the outside a weatherproof at least partly light-transmitting outer layer (5), characterized in that the outer layer (5) is a plaster layer with a layer thickness between 0.5 and 6 mm, made from a curing binder containing fillers in an amount such that the degree of transmission of radiation at normal incidence is above 20 %.

2. Heat-insulating composite system according to Claim 1, characterized in that a light-transmitting reinforcement (6) is arranged between the heat insulation material (4) and the light-transmitting outer layer (5).

3. Heat-insulating composite system according to Claim 1 or 2, characterized in that the heat insulation material (4) is mounted on the wall external surface (2) by means of an adhesive layer (2').

4. Heat-insulating composite system according to one of Claims 1 to 3, characterized in that the heat insulation material is in the form of heat-insulating panels (4).

5. Heat-insulating composite system according to Claim 4, characterized in that the heat-insulating panels (4) are formed from capillary panels, honeycomb panels, structural foam panels or fibreboards which are made from light-resistant, highly transparent plastics such as for example polycarbonate, polymethyl methacrylate or the like, or from glass fibres, glass foam or glass capillaries.

6. Heat-insulating composite system according to Claim 5, characterized in that the capillary panels are formed from a large number of adjacent, mutually bonded plastic tubes with an internal diameter of 1 to 3.5 mm preferably 2.5 mm, which are arranged perpendicular to the plane of the panel, i.e. in the direction of light transmission.

7. Heat-insulating composite system according to Claim 6, characterized in that the tubes are bonded together by melting while being cut to length using a hot wire, i.e. in each case in the region of the tube ends located in the planes of the panel external surfaces.

8. Heat-insulating composite system according to one of Claims 4 to 7, characterized in that the region of the panel joints (10) is reinforced with a light-transmitting adhesive tape (11).

9. Heat-insulating composite system according to one of Claims 1 to 8, characterized in that the adhesive layer (2') provided between the heat insulation material (4) and the wall external surface (2) forms the light-absorbing layer.

10. Heat-insulating composite system according to one of Claims 2 to 9, characterized in that the light-transmitting reinforcement (6) is in the form of a layer of light-transmitting knifing filler.

11. Heat-insulating composite system according to Claim 10, characterized in that the light-transmitting knifing filler incorporates glass fabrics and/or synthetic fabrics.

12. Heat-insulating composite system according to one of Claims 1 to 11 with an opaque heat insulation material (12) mounted on the building wall (1), characterized in that the opaque heat insulation material (12) mounted only in some parts of the building wall (1) is seamlessly bonded to light-transmitting heat insulation material (4) mounted in other parts of the building wall.

13. Heat-insulating composite system according to Claim 12, characterized in that not only the opaque heat insulation material (12) but also the light-transmitting heat insulation material (4) is in the form of heat-insulating panels and is mounted on the wall external surface.

14. Heat-insulating composite system according to Claims 12 or 13, characterized in that a seamless bonding of the opaque heat-insulating panels (12) with the light-transmitting heat-insulating panels (4) is achieved by applying the reinforcement (13) covering the opaque panels over the panel joints (14) between the opaque and the light-transmitting heat-insulating panels (12, 4) as far as the edge region of the light-transmitting panels (4) and by directly joining, flush to this reinforcement, the light-transmitting reinforcement (6) covering the light-transmitting heat-insulating panels (4).

15. Heat-insulating composite system according to one of Claims 1 to 14, characterized in that the light-transmitting heat insulation material (4) is mounted at a distance (a) from the light-absorbing wall external surface (2), allowing ventilation.

16. Heat-insulating composite system according to Claim 15, characterized in that the light-transmitting heat insulation material (4) is mounted on a load bearing structure (7) fixed to the building wall (1).

17. Heat-insulating composite system according to one of Claims 1 to 16, characterized in that the binders used for the weather-resistant outer layer (5) are organic binders, in particular synthetic resins in the form of a dispersion or solution.

18. Heat-insulating composite system according to Claim 17, characterized in that the outer layer material comprises polyacrylates, polymethacrylates, copolymers thereof, copolymers of styrene, ethylene, vinyl acetate or fluoroethylene, silicone resins, polycarbonates, epoxides or polyurethanes.

19. Heat-insulating composite system according to one of Claims 1 to 16, characterized in that the binder for the weather-resistant outer layer material comprises inorganic binders, in particular water glass.

20. Heat-insulating composite system according to one of Claims 1 to 19, characterized in that the fillers provided in the outer layer material are formed at least in part from inorganic glass fillers such as hollow glass spheres or foamed glass in the powdered state or else from crystalline silicates or carbonates, preferably from granulated glass, glass spheres or glass beads.

21. Heat-insulating composite system according to one of Claims 1 to 20, characterized in that the fillers provided in the outer layer material are formed at least in part from organic plastic granules of any shape based on polymethylacrylate, polycarbonate, polystyrene or the like.

## Revendications

1. Système composé d'isolation thermique (3) destiné à être fixé à un mur de bâtiment (1), comprenant une face externe (2) de paroi absorbant la lumière, un matériau d'isolation thermique (4), partiellement au moins transparent, et, côté extérieur, une couche de revêtement (5) résistant aux intempéries, partiellement au moins transparente, **caractérisé** en ce que la couche de revêtement (5) est un crépi ayant une épaisseur comprise entre 0,5 et 6 mm d'un matériau de remplissage dans un liant, durcissant par précipitation, dans une limite telle que le taux de transmission de rayonnement, pour une radiation incidente perpendiculaire, se situe au-dessus de 20 %.

2. Système composé d'isolation thermique selon la revendication 1, **caractérisé** en ce qu'une armature (6) transparente est placée entre le matériau d'isolation thermique (4) et la couche de revêtement transparent (5).

3. Système composé d'isolation thermique selon la revendication 1 ou 2, **caractérisé** en ce que le matériau d'isolation thermique (4) est fixé à la face externe de paroi (2) au moyen d'une couche de colle (2').

4. Système composé d'isolation thermique selon l'une des revendications 1 à 3, **caractérisé** en ce que le matériau d'isolation thermique se présente sous forme de panneaux d'isolation thermique (4).

5. Système composé d'isolation thermique selon la revendication 4, **caractérisé** en ce que les panneaux (4) d'isolation thermique sont des panneaux capillacés, des panneaux à nids d'abeilles, des panneaux en mousse à peau intégrée ou des panneaux de fibres, qui sont en matériaux synthétiques stables à la lumière, extrêmement transparents, comme par exemple du polycarbonate, du polyméthacrylate de méthyle ou analogues ou en fibres de verre, en écume de verre ou en tubes capillaires de verre.

6. Système composé d'isolation thermique selon la revendication 5, **caractérisé** en ce que les panneaux capillacés sont formés d'une pluralité de petits tubes en matière synthétique contigus, reliés les uns aux autres,dont le diamètre, qui va de 1 à 3,5 mm, est de 2,5 mm de préférence, lesquels tubes sont orientés transversalement par rapport au plan des panneaux, c'est-à-dire dans la direction de pénétration de la lumière.

7. Système composé d'isolation thermique selon la revendication 6, **caractérisé** en ce que les petits tubes sont, au cours de leur mise à longueur, au moyen d'un conducteur chauffant, reliés entre eux par fusion, c'est-à-dire respectivement dans la zone des extrémités des petits tubes situées dans les plans des surfaces externes des panneaux.

8. Système composé d'isolation thermique selon l'une des revendications 4 à 7, **caractérisé** en ce que la zone des jointures des panneaux (10) est armée par une bande adhésive (11) transparente.

9. Système composé d'isolation thermique selon l'une des revendications 1 à 8, **caractérisé** en ce que la couche de colle (2') prévue entre le matériau d'isolation thermique (4) et la face externe de paroi (2) constitue la couche absorbant la lumière.

10. Système composé d'isolation thermique selon l'une des revendications 2 à 9, **caractérisé** en ce que l'armature transparente (6) est formée par une couche de mastic transparent.

11. Système composé d'isolation thermique selon la revendication 10, **caractérisé** en ce que du tissu de verre textile et/ou du tissu de matière synthétique sont incorporés dans le mastic transparent.

12. Système composé d'isolation thermique selon l'une des revendications 1 à 11, comportant un matériau d'isolation thermique opaque (12) fixé au mur du bâtiment (1), **caractérisé** en ce que le matériau d'isolation thermique opaque (12), qui n'est fixé que dans certains secteurs de mur(1) du bâtiment, est raccordé sans joints au matériau d'isolation thermique transparent (4) fixé dans les autres secteurs du mur du bâtiment.

13. Système composé d'isolation thermique selon la revendication 12, **caractérisé** en ce qu'aussi bien le matériau d'isolation thermique opaque (12) que le matériau d'isolation thermique transparent (4) se présentent sous forme de panneaux et sont fixés à la face externe de paroi.

14. Système composé d'isolation thermique selon les revendications 12 ou 13, **caractérisé** en ce que,pour réaliser un raccordement sans joints des panneaux d'isolation thermique (12) opaques avec les panneaux d'isolation thermique (4) transparents, l'armature (13) recouvrant les panneaux opaques s'étend au-delà des jointures (14) entre les panneaux d'isolation thermique opaques et transparents (12, 4) jusqu'à la zone du bord des panneaux transparents (4) et en ce qu'à cette armature se raccorde, directement et à fleur, l'armature transparente (6) recouvrant les panneaux d'isolation thermique transparents (4).

15. Système composé d'isolation thermique selon l'une des revendications 1 à 14, **caractérisé** en ce que le matériau d'isolation thermique transparent (4) est fixé à une distance (a) de la face externe (2) de paroi absorbant la lumière, permettant une ventilation arrière.

16. Système composé d'isolation thermique selon la revendication 15, **caractérisé** en ce que le matériau d'isolation thermique transparent (4) est fixé au mur du bâtiment (1) sur une ossature (7).

17. Système composé d'isolation thermique selon l'une des revendications 1 à 16, **caractérisé** en ce que le liant employé pour la couche de revêtement (5) résistant aux intempéries est un liant organique, en particulier de la résine synthétique en dispersion ou en solution.

18. Système composé d'isolation thermique selon la revendication 17, **caractérisé** en ce que le matériau de la couche de revêtement comporte des polyacrylates, des polyméthacrylates, leurs copolymères, des copolymères de styrène, d'éthylène, des copolymères d'acétate de vinyle ou d'éthylène fluoré, de la résine silicone, des polycarbonates, de l'époxyde et du polyuréthane.

19. Système composé d'isolation thermique selon l'une des revendications 1 à 16, **caractérisé** en ce que le liant pour la couche de revêtement résistant aux intempéries comporte des liants inorganiques, notamment du verre soluble.

20. Système composé d'isolation thermique selon l'une des revendications 1 à 19, **caractérisé** en ce que les matériaux de remplissage prévus dans le matériau de la couche de revêtement sont, partiellement au moins, constitués par les matériaux inorganiques de remplissage en verre, comme des boules de verre creuses ou du verre moussé à l'état moulu ou également par des silicates ou des carbonates cristallins, de préférence par du menu verre, des boules de verre ou des lentilles de verre.

21. Système composé d'isolation thermique selon l'une des revendications 1 à 20, **caractérisé** en ce que les matériaux de remplissage prévus dans les matériaux de la couche de revêtement sont, au moins partiellement, constitués par des granulats organiques de matières synthétiques de modelage quelconque, à base de polyacrylate de méthyle, de polycarbonate, de polystyrène ou analogues.
